# EUROPÄISCHE PATENTANMELDUNG

(11) **EP 0 639 729 A1**
(43) Veröffentlichungstag der Anmeldung: **22.02.1995**
(21) Anmeldenummer: 93113136.1
(22) Anmeldetag: 17.08.1993
(51) Int. Cl.: F16H 21/36, F01B 9/06, F02B 41/04

(54) **Kurbelschleifenantriebsgetriebe zur Umwandlung einer hin-und hergehenden Bewegung in eine Drehbewegung oder umgekehrt**

(71) Anmelder: Schad, Anton, D-88319 Aitrach (DE)
(72) Erfinder: Schad, Anton, D-88319 Aitrach (DE)

(57) **Zusammenfassung**

Kurbelschleifenantriebsgetriebe zur Umwandlung einer hin- und hergehenden Bewegung in eine Drehbewegung oder umgekehrt zum Erreichen eines höheren Wirkungsgrades,durch Anordnen von mindestens 2 oder mehreren sich abwechslungsweise einander entgegenbewegenden Platten(6),deren jede einen schräg zur Nullpunktlinie (S) gerichteten Führungsschlitz (5),welcher durch eine Kurve nach einem Ende zu einen langen und nach dem anderen Ende zu einen kurzen, rechtwinklig zur Nullpunktlinie (S) verlaufenden Ausläufer aufweist und einer Kurbelwelle deren Kurbelzapfen (3) durch den Führungsschlitz (5) reicht.

## Beschreibung

Die Erfindung bezieht sich auf ein Kurbelschleifenantriebsgetriebe nach dem Oberbegriff des Anspruchs 1.

Zur Umwandlung einer hin-und hergehenden,bzw.auf-und abgehenden Bewegung in eine Drehbewegung werden zumeist Kolben,verbunden an Gelenken bzw.Lagern mit Pleuelstange und Kurbelwelle angewandt.Bei solchen Schubkurbelgetrieben wird jedoch ein vergleichsweise niedriger Wirkungsgrad erreicht,weil bei jeder Umdrehung zwei Totpunkte überwunden werden müssen.Stehen der an einem Ende am Pleuel angelenkte Kolbenbolzen,der wiederum am anderen Ende vom Pleuel angelenkte Kurbekzapfen und der Lagerzapfen der Kurbelwelle in einem Winkel von 180°,das heißt in einer Gerade zueinander,dann ist der sogenannte Tot-bzw.Nullpunkt erreicht.Ausgehend von dieser Konstellation in Ruhestellung und im Zylinder findet die Zündung statt,dann wird die durch die Zündung freigesetzte Energie von den Zylinderwänden, dem Kolben und über diesen auf die Pleulstange und die Kurbelwelle absorbiert,gleich wie die Energie von einem Hammerschlag auf einen Amboß im Amboß absorbiert wird,der Wirkungsgrad war in dieser Version gleich Null,weil die Überwindung der Totpunkte nur erreicht wird,wenn die Anfangsbewegung von einer Drehbewegung stammt.

Als Kurbelgetriebe von Hubkolben-Brennkraftmaschinen sind auch gattungsgemäß Kreuzschubkurbelgetriebe bekannt,bei denen der Kurbelgleitzapfen in senkrecht oder auch schiefwinklig verlaufende Kanalführungen eingreift,vgl.z.B.US 39 06 908.

Der Erfindung liegt die Aufgabe zugrunde,einen Mechanismus zu schaffen,bei dem ein möglichst hoher Wirkungsgrad bei der Umwandlung einer hin-und hergehenden Bewegung in eine Drehbewegung erreicht wird.

Diese Aufgabe wird mit dem kennzeichnenden Merkmal gemäß Anspruch 1 und 2 gelöst.

Durch die DE-PS 71 83 16 und die DE-PS 584082 sind schon schiefwinklige,gekrümmte Kurbelschleifen bekannt geworden, allerdings mit jeweils gleich langen Ausläufern.

Bei der Erfindung wird aufgrund der ungleich langen Ausläufer des schräg zur Nullpunktlinie (S) verlaufenden Führungsschlitzes (5) ein hoher Wirkungsgrad bei der Anfangsbewegung erreicht.

Ausführungsbeispiele der Erfindung sind in den Zeichnungen dargestellt und werden im folgenden näher erläutert.Es zeigen.
**Fig.I** eine Seitenansicht bzw.Schnitt B-B durch
   **Fig.II** auf das Kurbelschleifenantriebsgetriebe mit 2 Platten **(T)** (6) (G) (6),die jeweils eine schräg zur Nullpunktlinie (S) mit einem langen und einem kurzen Ausläufer aufweisenden Führungsschlitz (5) am Anfang der Hin-bzw.Abwärtsbewegung der oberen Platte (T) (6) und Her- bzw.Aufwärtsbewegung der unteren Platte (G) (6);
**Fig. II** eine Seitenansicht bzw.Schnitt A-A durch **Fig.I**
**Fig.III** eine Seitenansicht auf das Kurbelschleifenantriebsgetriebe bei maximaler Kraftübertragung und
**Fig.IV** eine Seitenansicht auf das Kurbelschleifenantriebsgetriebe,wobei die Kurbelgleitzapfen (3) in der Gerade der Nullpunktlinie (6) dargestellt sind.

In **Fig.I** und **Fig.II** = Schnitt von **Fig.I** ist ein Kurbelschleifenantriebsgetriebe mit zwei gegenläufigen Platten (T) (6) = treibende Platte und (G) (6) = getriebene Platte dargestellt.Der in den beiden Platten jeweils schräg angeordnete Führungsschlitz (5) ist dabei nicht gerade,sondern durch Kurven den jeweiligen Enden zu so abgebogen,daß durch den Richtungswechsel Ausläufer im Führungsschlitz (5) entstehen,die in einem rechten,das heißt 90°- Winkel zur Nullpunktlinie (S) verlaufen.Der für die Anfangsbewegung der Hinbewegung festgelegte Ausläufer des Führungsschlitzes (5) ist dabei länger als der Ausläufer im schräg zur Nullpunktlinie (S) verlaufenden Führungsschlitzes (5) für die Endbewegung der treibenden Platte (T) (6).Dadurch wird für die Endphase der Hinbewegung bis zum Haltepunkt ein wirkungsvoller Effekt geschaffen.

Zur Funktion dieses Effektes sind mindestens 2 gegenläufige Platten (6) mit dem jeweiligen vorher beschriebenen Führungsschlitz (5) und einer Kurbelwelle,bei der die Kurbellagerzapfen (1) und die Kurbelgleitzapfen (3) verbunden durch die Kurbelwangen (2) in einem Winkel von 180°,das heißt in einer Gerade zueinander stehen,erforderlich.Die Kurbellagerzapfen (1) rotieren dabei gleich wie bei der üblichen Kurbelwelle um die eigene Achse.Dagegen sind die um die Kurbellagerzapfen (1) kreisenden,durch die Kurbelwangen (2) verbundenen Kurbelgleitzapfen (3) nicht auf den mit dem Kolben verbundenen Pleuel gelagert,sondern reichen durch den in den Platten (6) schräg zur Nullpunktlinie angeordneten Führungsschlitz (5) und gleiten bei der hin-und hergehenden Bewegung in diesem entlang.

Wie in **Fig.I** ersichtlich,steht der um den Kurbellagerzapfen (1) kreisende Kurbelgleitzapfen (3) am Anfang der Hinbewegung im langen,rechtwinklig zur Nullpunktlinie (S) verlaufenden Ausläufer des Führungsschlitzes (5) der treibenden Platte (T) (6) in einem Abstand von ca.0,65 zum maximalen Abstand des Kurbelgleitzapfens (3) zur Nullpunktlinie (S).Dies bedeutet, daß bei der geradlinigen Anfangshinbewegung ca.65 % der aufgewendeten Kraft in die Drehbewegung übertragen werden und nicht Null wie bei den üblichen Kurbelwelle- und Pleuelstangenprinzipien.Während der Kurbelgleitzapfen (3) bei der geradlinigen Hinbewegung der treibenden Platte (T) (6) im Führungsschlitz (5**)** entlanggleitet,erfolgt zugleich die Kreisbewegung des Kurbelgleitzapfens (3),womit die angestrebte Drehbewegung der Kurbellagerzapfen (1) mit einem höheren Wirkungsgrad erreicht wird.Gleichzeitig wird durch den als Mitnehmer wirkenden um 180° versetzten,auch in Kreisbewegung befindlichen Kurbelgleitzapfen (3) der getriebenen Platte (G) (6) diese her-bzw.hochbewegt,wobei der Kurbelgleitzapfen (3) im kurzen Ausläufer des Führungsschlitzes (5) entlanggleitet.

In **Fig. III** sind die um den Kurbellagerzapfen (1) kreisenden Kurbelgleitzapfen (3) in einem rechten Winkel zur Nullpunktlinie (S) dargestellt.In dieser Stellung ist die Kraftübertragung der linear sich hin-bzw.abwärtsbewegenden,treibenden Platte (T)(6) zur Drehbewegung am größten.

In **Fig.IV** befinden sich die Kurbelgleizapfen (3) der treibenden Platte (T)(6) und getriebenen Platte (G)(6) in der Gerade der Nullpunktlinie (S).Davon ausgehend,daß sich die treibende Platte (T)(6) weiter hin-bzw.nach unten bewegt,dann gleitet der Kurbelgleitzapfen (3) in dem schräg zur Nullpunktlinie (S) angeordneten Führungsschlitz (5) weiter,wobei auch die Kreisbewegung des Kurbelgleitzapfens (3) weiterläuft,indem dieser die Nullpunktlinie (S) durchlaufen hat.Weil während der Endphase der Hin-bzw.Abwärtsbewegung der treibenden Platte (T)(6) bis zum Haltepunkt dieser Platte die Schrägrichtung des schräg zur Nullpunktlinie (S) angeordneten Führungsschlitzes (5) beibehalten hat,gleitet auch der Kurbelgleitzapfen (3) während dieser Endphase bis zum Haltepunkt in dem schräg zur Nullpunktlinie (S) angeordneten Führungsschlitz weiter,wobei die Kreisbewegung des Kurbelgleitzapfens (3) fortgesetzt wurde.Während diesem Ablauf wurde die gegenüberliegende,getriebene Platte (G)(6) weiter her-bzw.hochbewegt,wobei jedoch der,dieser Platte (G)(6) zugeordnete Kurbelgleitzapfen (3) in den langen,rechtwinklig zur Nullpunktlinie (S) verlaufenden Ausläufer des schräg zur Nullpunktlinie (S) angeordneten Führungsschlitzes (5) gleitete.Dies führt sogar dazu,daß der einen Kreis beschreibende Kurbelgleitzapfens (3) der in dem rechtwinklig zur Nullpunktlinie (S) angeordneten langen Ausläufer gleitet,die getriebene Platte (G)(6) nicht nur in die Endphase der Her-bzw.Hochbewegung bis zum Haltepunkt brachte,sondern diese für einen kurzen Weg und Zeit synchron in die entgegengesetzte gleiche Hin-bzw.Abwärtsbewegung,die von der treibenden Platte (T)(6) bis zur Schlußphase ausging,bewegt.Somit hat für die getriebene Platte (G)(6),die durch die Umsteuerung von der Her-zur Hinbewegung führte und dadurch die Funktion der treibenden Platte (T)(6) übernommen hat,die Hinbewegung schon begonnen, als die gegenüberlaufende Platte (T)(6) sich immer noch eine kurze Wegstrecke hinbewegte.

Somit entsteht bei der Umsteuerung der geradlinigen hin-und hergehenden Bewegung auf die Drehbewegung durch die Anordnung von mindestens 2 abwechlungsweise sich entgegengesetzt bewegenden Platten (T)(6) und (G)(6) mit dem speziellen Führungsschlitz (5) durch den die entgegengesetzten Kurbelgleitzapfen (3) reichen ein höherer Wirkungsgrad und nie ein Nullpunkt.

Wahlweise können die treibende Platte (T)(6) und getriebene Platte (G)(6) auch so angeordnet werden,daß sie sich synchron hin-und herbewegen.Dies erreicht man dadurch,daß diese beiden Platten (6) nebeneinander geführt werden,wobei durch den jeweiligen Führungsschlitz (5) der Kurbelgleitzapfen (3) durch diese beiden Führungsschlitze (5) reicht.Die Schräge der Führungsschlitze (5) ist paralell,die langen Ausläufer von diesen sind jedoch entgegengesetzt anzuordnen.

### Bezugszeichenliste:

- 1: = Kurbellagerzapfen
- 2: = Kurbelwange
- 3: = Kurbelgleitzapfen
- 4: = Schubstange
- 5: = Führungsschlitz
- 6: = Platte
- S: = Nullpunktlinie
- T: = Treibende Platte (6)
- G: = getriebene Platte (6)

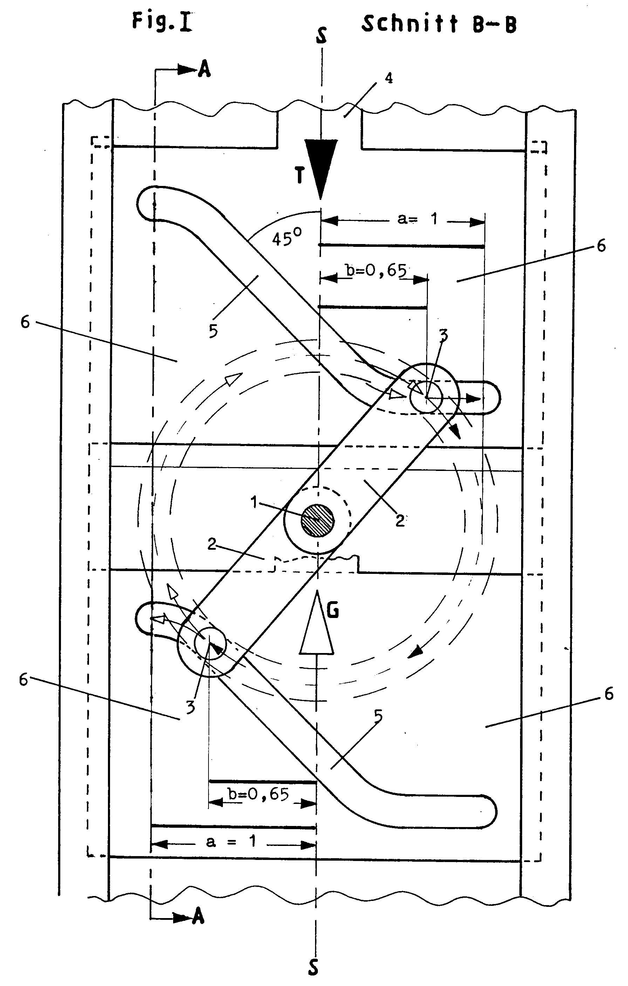

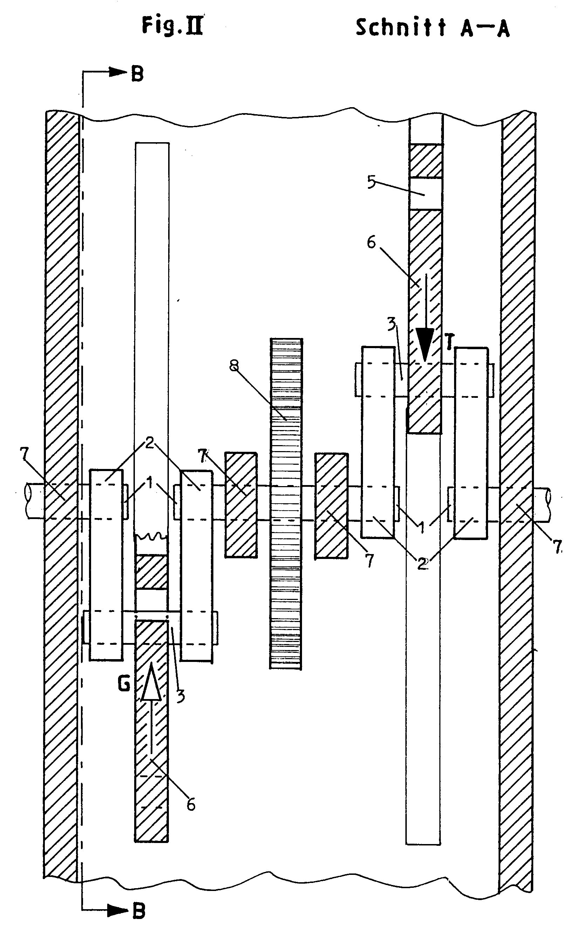

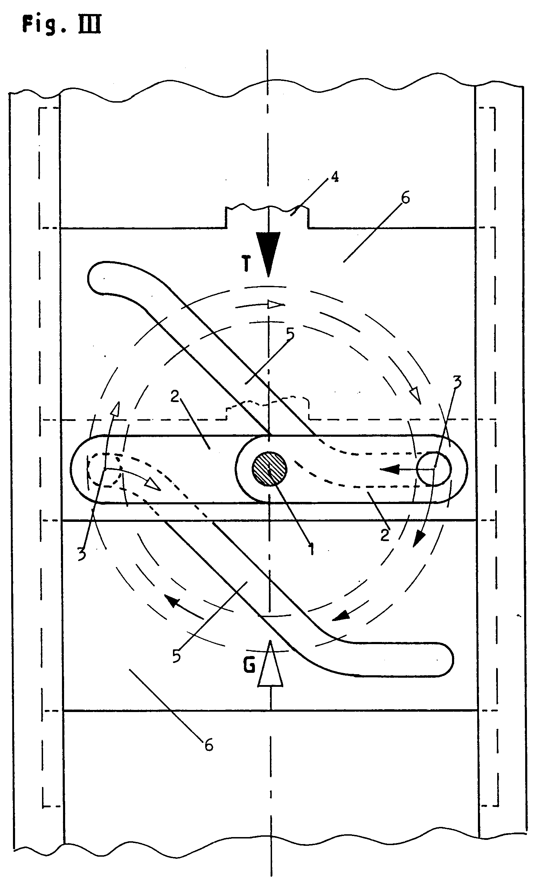

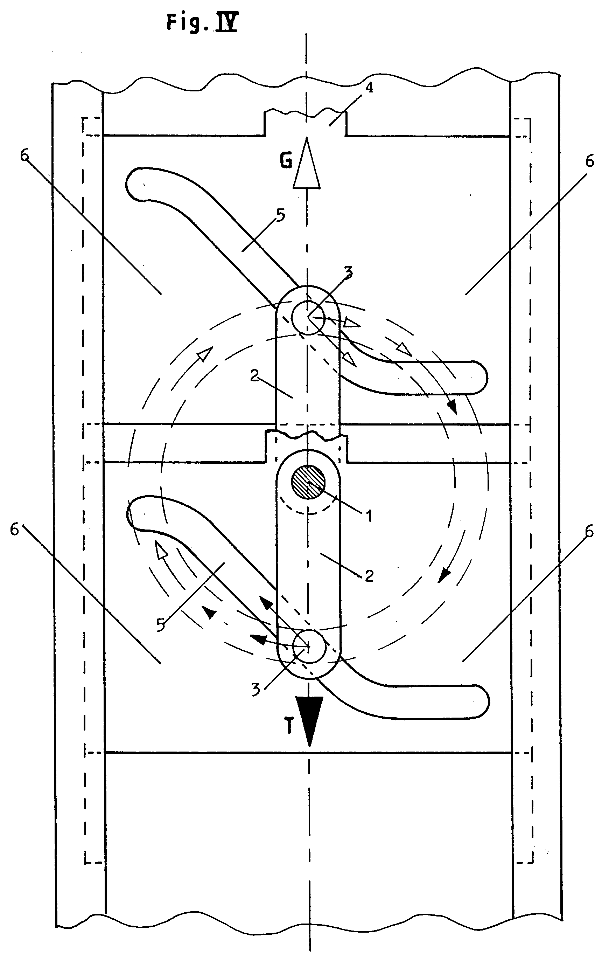

## Patentansprüche

1. Kurbelschleifenantriebsgetriebe zur Umwandlung einer hin- und hergehenden Bewegung in eine Drehbewegung oder umgekehrt mit mindestens 2 oder mehreren Kurbelschleifenschlitzführungsplatten (6),die starr mit einer oder zwei einander gegen gegenüberliegenden Schubstangen (4) und diese wiederum mit einem Kolben fest verbunden sind,und mit einer Kurbelwelle,deren Kurbelzapfen (3) durch den Führungsschlitz (5) reicht, **dadurch gekennzeichnet**,daß der schräg zur Nullpunktlinie (S) verlaufende Führungsschlitz (5) durch eine Kurve nach einem Ende zu einen langen rechtwinklig zur Nullpunktlinie (S) und nach dem anderen Ende zu einen kurzen rechtwinklig zur Nullpunktlinie (S) verlaufenden Ausläufer aufweist.

2. Kurbelschleifenantriebsgetriebe nach Anspruch 1,dadurch gekennzeichnet,daß der schräg zur Nullpunktlinie (S) verlaufende Führungsschlitz (5) nur einen Ausläufer aufweist.

3. Kurbelschleifenantriebsgetriebe nach Anspruch 1,dadurch gekennzeichnet,daß die Länge des langen als auch des kurzen Ausläufers,sowie die von der Schräge des Führungsschlitzes (5) zu diesen Ausläufer führende Kurve den individuellen Anforderungen und Beanspruchungen entsprechend gewählt und geformt ist.

4. Kurbelschleifenantriebsgetriebe nach Anspruch 1-2 und 3, dadurch gekennzeichnet,daß die Konstruktion bzw. der Mechanismus des beschriebenen Getriebes bei Brennkraft-und Dampfmaschinen,bei Druckluft und auch mit Muskelkraft betriebenen Geräten z.B.Fahrrad oder Tretboot angewandt werden kann.
